# FASCICULE DE BREVET EUROPEEN

(11) **EP 0 426 923 B1**
(45) Date de publication et mention de la délivrance du brevet: **22.01.1997**
(21) Numéro de dépôt: 89403070.9
(22) Date de dépôt: 08.11.1989
(51) Int. Cl.: H04N 7/167

(54) **Procédé d'embrouillage et de désembrouillage de signaux vidéo composites et dispositif de mise en oeuvre**
Verfahren und Vorrichtung zur Verschleierung und Entschleierung zusammengesetzter Videosignale
Compound video signal scrambling and unscrambling method and apparatus

(43) Date de publication de la demande: 15.05.1991
(73) Titulaire: LABORATOIRE EUROPEEN DE RECHERCHES ELECTRONIQUES AVANCEES, 92400 Courbevoie (FR)
(72) Inventeur: Daniel, Patrick, F-92045 Paris la Défense (FR); Renard, Francis, F-92045 Paris la Défense (FR); Guillon, Jean-Claude, F-92045 Paris la Défense (FR)
(74) Mandataire: Ruellan-Lemonnier, Brigitte

(56) Documents cités:
- EP-A- 0 127 381
- WO-A-83/01881
- WO-A-85/00491
- FR-A- 2 320 676
- FR-A- 2 583 946
- FR-A- 2 631 193
- US-A- 4 292 650

## Description

La présente invention se rapporte à un procédé d'embrouillage et de désembrouillage de signaux vidéo composites, et dispositif de mise en oeuvre.

Les procédés actuellement mis en oeuvre pour embrouiller des signaux vidéo, en particulier dans le domaine de la télévision à péage, ont pour particularité de transmettre d'une part des messages d'accès, valables pour tous les récepteurs, simultanément avec les signaux vidéo, et d'autre part de transmettre périodiquement des messages d'autorisation spécifiques à chaque récepteur par une voie différente, par exemple par le poste ou par voie téléphonique. Du fait de leur mode de transmission, la périodicité de transmission de ces messages d'autorisation ne peut être que relativement grande, par exemple d'un mois. Une période aussi longue peut être facilement mise à profit par des "pirates" qui disposent ainsi de suffisamment de temps pour retrouver la clé d'embrouillage et pour en profiter.

L'invention a pour objet un procédé d'embrouillage de signaux vidéo composites, l'embrouillage se faisant par permutation de ligne et étant commandé par une séquence pseudo-aléatoire dépendant d'un mot de commande dont la valeur encryptée est incorporée au signal vidéo composite, procédé incluant dans les lignes inutilisées d'au moins une partie des images émises des paquets de données encryptées correspondant au mot de commande, ces données étant des messages d'autorisation spécifiques à chaque utilisateur, et des messages d'accès communs à tous les utilisateurs, ledit procédé étant caractérisé par le fait que la salve de chrominance relative à une ligne est décalée vers la ligne suivante.

L'invention a aussi pour objet un procédé de désembrouillage de signaux vidéo composites, l'embrouillage ayant été effectué par permutation de ligne et étant commandé par une séquence pseudo-aléatoire, le désembrouillage étant commandé par une séquence pseudo-aléatoire identique à et synchronisée avec celle d'embrouillage, la séquence pseudo-aléatoire d'embrouillage dépendant d'un mot de commande dont la valeur encryptée est incorporée au signal vidéo composite, l'embrouillage incluant dans les lignes inutilisées d'au moins une partie des images émises des paquets de données encryptées correspondant au mot de commande, ces données étant des messages d'autorisation spécifiques à chaque utilisateur, et des messages d'accès communs à tous les utilisateurs, le désembrouillage décodant les messages d'autorisation et d'accès, ledit procédé étant caractérisé en ce que, la salve de chrominance relative à une ligne du signal vidéo ayant été décalée vers la ligne suivante lors de l'embrouillage, la durée de désembrouillage d'une ligne étant égale à la durée d'une ligne, on transmet la salve de chrominance à travers un registre tampon pour ensuite restituer la ligne désembrouillée correspondant à la salve précitée.

L'invention a aussi pour objet un dispositif d'embrouillage de signaux vidéo composites, pour un système de transmission d'images comportant un émetteur et des récepteurs, comportant, dans l'émetteur un circuit numérique d'embrouillage relié à un générateur de séquences pseudo-aléatoires commandé par une unité de commande comportant des moyens produisant des messages d'autorisation cryptés spécifiques à chaque récepteur et des messages d'accès communs à tous les récepteurs, ces moyens étant reliés à la voie d'émission de l'émetteur, ledit dispositif étant caractérisé par des moyens pour décaler la salve de chrominance d'une ligne donnée vers la ligne suivante.

L'invention a aussi pour objet un dispositif de désembrouillage de signaux vidéo composites, pour un système de transmission d'images comportant un émetteur et des récepteurs, l'embrouillage se faisant par permutation de ligne et étant commandé par une séquence pseudo-aléatoire dépendant d'un mot de commande dont la valeur encryptée est incorporée au signal vidéo composite et incluant dans les lignes inutilisées d'au moins une partie des images émises des paquets de données encryptées correspondant au mot de commande, ces données étant des messages d'autorisation spécifiques à chaque récepteur, et des messages d'accès communs à tous les utilisateurs, dispositif comprenant un circuit numérique de désembrouillage relié à un générateur de séquences pseudo-aléatoires commandé par une unité de commande reliée à un processeur de sécurité auquel elle transmet les valeurs cryptées des messages d'autorisation et des messages d'accès, ledit dispositif étant caractérisé en ce que la salve de chrominance relative à une ligne du signal vidéo ayant été décalée vers la ligne suivante lors de l'embrouillage, il comprend un registre tampon transmettant la salve de chrominance sans que le dispositif n'ait à les mémoriser.

La présente invention sera mieux romprise à la lecture de la description détaillée d'un mode de réalisation, pris comme exemple non limitatif, illustré par le dessin annexé sur lequel :
- la figure 1 est un bloc-diagramme simplifié d'un émetteur de programmes de télévision à péage embrouillés selon le procédé de l'invention et d'un des récepteurs recevant ces programmes et comportant un dispositif de désembrouillage correspondant,
- la figure 2 est un chronogramme de signaux montrant la disposition des différentes données nécessaires au désembrouillage par rapport à certaines des premières lignes des images émises par l'émetteur de la figure 1.
- la figure 3 est un chronogramme montrant la structure des paquets de données émis par l'émetteur de la figure 1 sur une période de 20 secondes, et
- la figure 4 est un chronogramme de signaux produits pendant une image complète envoyée par l'émetteur de la figure 1.

Le système de diffusion de programmes de télévision à péage décrit ci-dessous se rapporte à un standard de diffusion européen à 25 images complètes par seconde, mais il est bien entendu qu'il peut s'appliquer à tout autre standard en y apportant des modifications évidentes pour l'homme du métier. Par ailleurs, il est bien entendu que les émissions peuvent n'être embrouillées que pour certains programmes et être diffusées en clair pour les autres programmes.

L'émetteur 1 et le récepteur de télévision 10 ne sont décrits que succinctement ci-dessous, car la plupart de leurs circuits sont bien connus en soi. Seuls font partie de l'invention, dans l'émetteur les circuits de production de paquets de messages d'autorisation et d'accès, et les circuits d'insertion de ces paquets de données dans certaines des lignes des images à embrouiller, et dans le récepteur les circuits de désembrouillage.

L'émetteur 1 comporte une source d'images fournissant des signaux en vidéo composite. Sa sortie est reliée par l'intermédiaire d'un convertisseur analogique-numérique 3 à un circuit intermédiaire embrouilleur de vidéo 4 de type connu en soi. Ce circuit 4 est commandé par une unité de commande 5 via un générateur de séquences pseudo-aléatoires 6, et il envoie à cette unité centrale des signaux de synchronisation correspondant aux signaux vidéo. Le circuit 4 est relié via un convertisseur numérique-analogique 7 à un émetteur de puissance 8 dont l'antenne d'émission est référencée 9.

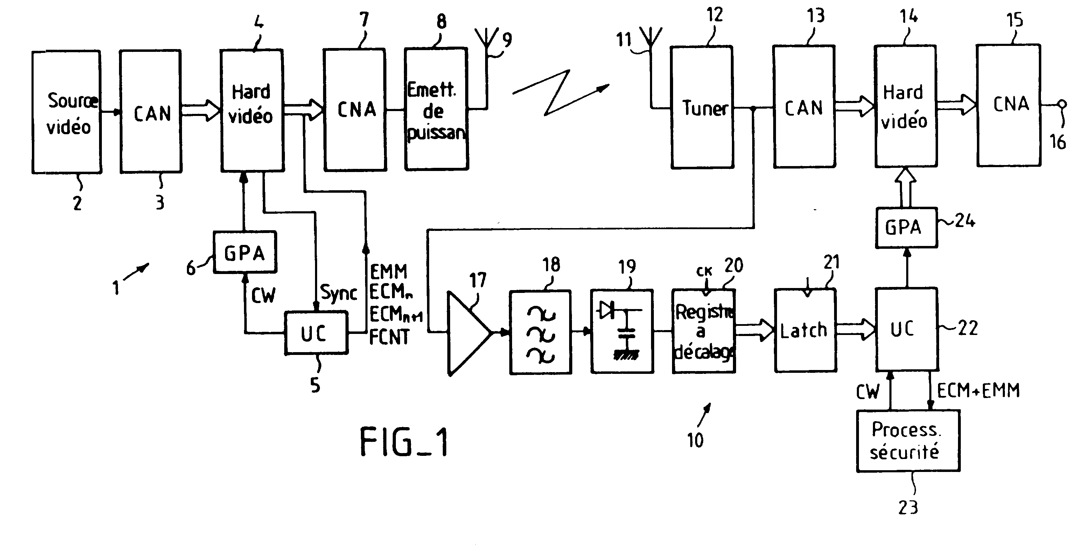

Sur la figure 1, on a représenté le bloc-diagramme de l'un des récepteurs de télévision pouvant recevoir les émissions de l'émetteur 1 et muni de circuits de désembrouillage conformes à l'invention. Ce récepteur est référencé 10. Le récepteur 10 comporte une antenne de réception 11 reliée à un syntoniseur ("tuner" en anglais) 12 suivi d'un convertisseur analogique-numérique 13, d'un circuit numérique désembrouilleur vidéo 14, et d'un convertisseur numérique-analogique 15 à la sortie 16 duquel on recueille les signaux vidéo désembrouillés.

La sortie du circuit 12 est également reliée, via un amplificateur 17, un filtre 18 et un détecteur de valeur de crête 19, à l'entrée série d'un registre à décalage 20. Les sorties parallèles du registre 20 sont reliées, via un registre-tampon 21, aux entrées de données d'un calculateur à microprocesseur 22, par exemple un microprocesseur de type EF6805.

Le calculateur 22 est relié bi-directionnellement à un processeur de sécurité, par exemple un processeur de type 1821 tel qu'utilisé dans les "cartes à puce" (carte à microprocesseur connue également sous l'appellation de "smart card") et les cartes de crédit bancaire. Le calculateur 22 est également relié à un générateur de séquences pseudo-aléatoires 24, lui-même relié au circuit 14.

Dans l'émetteur 1, les signaux vidéo issus de la source 2 et numérisés par le convertisseur 3 sont embrouillés dans le circuit 4 sous la commande de séquences de signaux pseudo-aléatoires produites par le générateur 6. Chacun des nombres binaires successifs d'une séquence apparaissant en synchronisme avec les lignes successives du signal vidéo, détermine un point de coupure dans la ligne correspondante, ce point de coupure pouvant être situé à n'importe quel endroit de la ligne. L'embrouillage consiste à permuter les parties de la ligne situées de part et d'autre de ce point de coupure. Ce procédé d'embrouillage, dit "par permutation de ligne" étant bien connu en soi, ne sera pas décrit plus en détail.

Les séquences du générateur pseudo-aléatoire 6 ont un cycle relativement long (par exemple 20 secondes) et sont commandées par l'unité de commande 5 en fonction d'un message d'accès au programme, appelé ici ECM (de "Entitlement Checking Message"), commun à tous les récepteurs, et en fonction d'un message d'autorisation, appelé ici EMM (de "Entitlement Management Message"), spécifique à chaque récepteur. Dans les systèmes connus de télévision à péage, les messages d'autorisation sont communiqués aux abonnés par poste, par modem, ou par toute autre voie de télécommunication. Les messages d'accès ne peuvent donc être modifiés qu'à des intervalles de temps relativement longs (quelques semaines en général), ce qui permet à des "pirates" de les retrouver (on estime que ces messages peuvent être retrouvés en 1 à 2 jours), bien avant leur modification suivante.

Selon la présente invention, l'émetteur 1 inclut dans la vidéo composite (à l'entrée du convertisseur 7) des messages d'accès et des messages d'autorisation. De façon avantageuse, il inclut également dans cette vidéo composite en même temps le message d'accès courant (ECMₙ) et le suivant (ECMₙ₊₁). Le message courant sert à déchiffrer le signal vidéo à l'allumage du décodeur, et le suivant à synchroniser le décodeur, grâce à la valeur du compteur de trame qui, lorsqu'elle s'incrémente d'une unité en passant de sa valeur maximale (255 dans le cas présent) à zéro, commande le chargement du mot de contrôle (CW) dans le générateur pseudo-aléatoire, de la façon décrite ci-dessous.

Du fait que les messages d'accès et d'autorisation sont transmis avec la vidéo composite, et que les messages d'accès peuvent être modifiés à de courts intervalles de temps (par exemple toutes les 20 secondes), il est pratiquement impossible de "pirater" le décodeur.

Dans l'émetteur 1, l'unité centrale 5 assure, entre autres, une fonction de compteur de trames (FCNT). Ce compteur est incrémenté d'une unité toutes les deux trames, c'est-à-dire à chaque image complète (toutes les 80 ms pour un standard à 50 Hz à trames entrelacées), grâce aux tops d'images du signal vidéo envoyés par le circuit 4. Dans le cas présent, ce compteur a un état maximal de comptage égal à 255 (compteur à 8 bits). Après avoir atteint cet état maximal, le compteur repasse à zéro, et ce passage à zéro commande l'envoi au générateur pseudo-aléatoire 6 d'un mot de commande (CW, de "Control Word") dont la version encryptée est ledit message d'accès. Ce mot de commande peut avoir par exemple une longueur de 60 bits, et il est choisi aléatoirement. Ce mot de commande détermine un nouveau cycle du générateur 6.

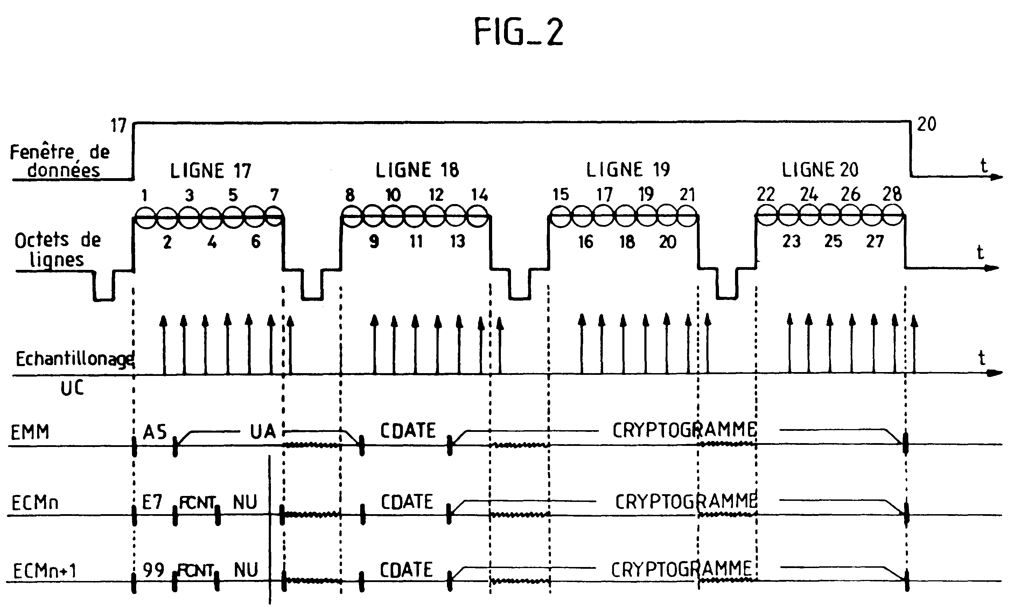

Par ailleurs, l'unité de commande 5 envoie au circuit 7 à des instants déterminés les informations suivantes : l'état du compteur (FCNT), des messages d'autorisation, le message d'accès en cours et le suivant, et la date courante. L'unité centrale envoie ces informations pendant l'émission de lignes non utilisées par l'image. Selon le standard CCETT à 625 lignes, il existe des lignes inutilisées par l'image visible avant la 23ème ligne. Dans le présent exemple, on utilise pour le codage quatre de ces lignes non prises par l'image, par exemple les lignes 17 à 20, comme représenté en figure 2. A chacune de ces lignes, pendant la durée utile de la ligne, l'unité centrale envoie sept octets de données de codage, soit 56 bits par ligne et 28 octets pour ces quatre lignes. Les zéros binaires correspondent au niveau du noir, et les "1" au niveau du blanc. Ainsi au début de chaque image complète (toutes les 80 ms dans l'exemple précité), un paquet de données (de 28 octets) est incorporé au signal vidéo composite émis par l'émetteur 1.

Trois sortes différentes de paquets de données sont émises : EMM, ECMₙ et ECMₙ₊₁. Un exemple de structure de chacun de ces types de paquets a été représenté en figure 2. Avantageusement, ces paquets de données sont codés par exemple en code de Hamming, de façon à être mieux immunisés contre les parasites de transmission. Selon une variante de l'invention, les différents octets de chaque paquet peuvent être entrelacés au sein de ce paquet pour améliorer l'immunité aux parasites. Bien entendu, ils sont tout d'abord désentrelacés en correspondance dans chaque décodeur.

Dans le chronogramme de la figure 2, les différents paquets comportent un en-tête d'identification. Cet en-tête, d'une longueur de deux octets, a, par exemple, la valeur (en hexadécimal) A5,E7 et 99 respectivement pour les paquets EMM, ECMₙ et ECMₙ₊₁.

Les paquets de données EMM comportent ensuite six octets UA de codage d'adresse d'un décodeur particulier, ce qui permet de coder 2²⁴ décodeurs différents, puis quatre octets de codage de la date courante, les 16 octets restants étant disponibles pour coder la valeur (encryptée) du message d'autorisation.

Le codage des paquets ECMₙ est de même forme que celui des paquets ECMₙ₊₁. Après les deux octets d'en-tête, il comporte deux octets donnant la valeur de FCNT. Les trois derniers octets de la première ligne et le premier de la ligne suivante sont inutilisés dans le cas présent. Ensuite quatre octets sont réservés à la date courante, et les 16 derniers octets sont disponibles pour coder la valeur (encryptée) du message d'accès, courant ou suivant.

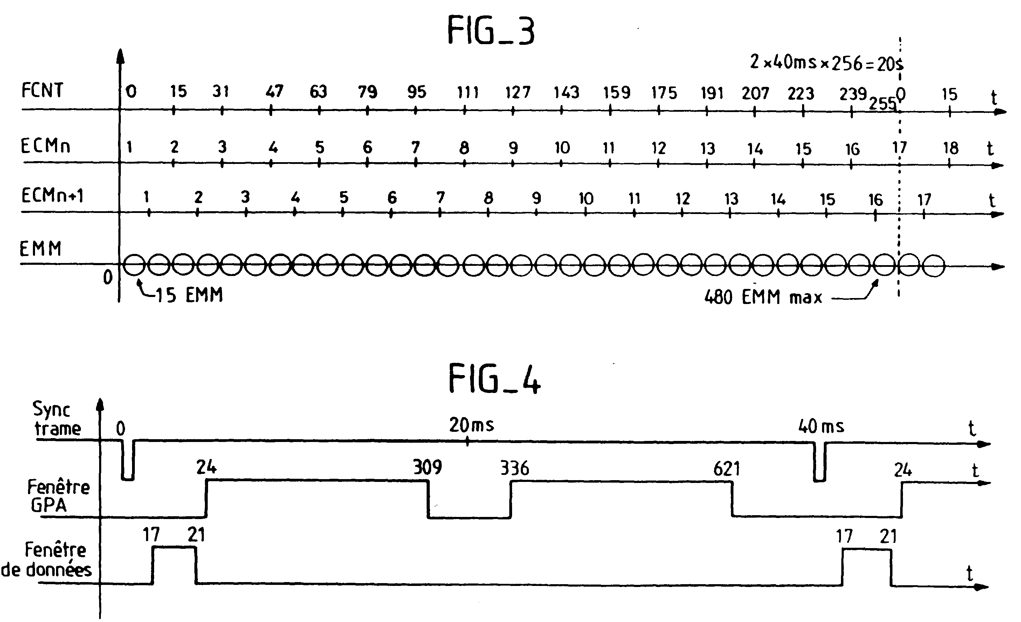

On a représenté en figure 3, sur la première ligne, un cycle de comptage du compteur de trames FCNT de 0 à 255, c'est-à-dire pour une période de temps de 20 secondes. Pendant ce temps, l'unité centrale 5 produit continuellement les valeurs de ECMₙ et ECMₙ₊₁ au rythme de seize valeurs de chaque pour ladite période de 20 secondes. Donc, pendant cette période de 20s, 480 valeurs, au maximum, de EMM sont produites.

Dans l'exemple de réalisation représenté, l'unité centrale envoie en multiplex à l'entrée du circuit 7 les séquences suivantes : 1.ECMₙ, 15.EMM, 1.ECMₙ₊₁, 15.EMM, 1ECMₙ,... etc. Ainsi, à chaque période de 20 secondes (pendant les états 0 à 255 de FCNT), l'unité centrale incorpore au signal vidéo composite au total : 16.ECMₙ, 16ECMₙ₊₁ et 480EMM. A un tel rythme, un peu plus de 2 millions d'EMM différents sont émis par l'émetteur 1 en 24 heures.

Dans chaque récepteur, tel que le récepteur 10 représenté en figure 1, le signal composite recueilli à la sortie du circuit 12 est amplifié, filtré, démodulé (en 17,18 et 19 respectivement) et les octets successifs de données ainsi démodulés sont transmis à l'unité centrale via le tampon 21. Le remplissage du registre à décalage 20 se fait au rythme des signaux d'horloge (CK) produits par l'unité centrale 22.

Bien entendu, les données arrivant à l'unité centrale 22 depuis le registre 21 sont : EMM, ECMₙ et ECMₙ₊₁. Lorsque l'unité centrale 22 reconnaît des paquets ECMₙ ou ECMₙ₊₁ (d'après leur en-tête E7 ou 99), elle en extrait la valeur FCNT qui lui sert à corriger, le cas échéant, l'état de comptage de son compteur de trames (sous-programmes de cette unité centrale). L'unité centrale 22 utilise une roue libre pour produire FCNT et la verrouille sur les octets 3 et 4 de la ligne 17 donnant la valeur courante vraie de FCNT, qui est avantageusement codée en code de Hamming.

Comme représenté en figure 4, l'état zéro du compteur de trames (qui revient toutes les 40 ms) détermine les phases de traitement des paquets par l'unité centrale et de chargement du générateur pseudo-aléatoire. Les fenêtres actives du générateur pseudo-aléatoire se produisent pendant les lignes utiles de l'image, c'est-à-dire, pour un standard CCETT à 625 lignes, des lignes 23 à 310 et 336 à 623 (pour les 1ère et 2ème trames respectivement de chaque image). L'unité centrale 22 produit au moment de chaque passage à zéro de FCNT une boucle d'attente d'une durée d'environ 20 lignes pour être en mesure de recevoir les paquets de données qu'elle reçoit à partir de la ligne 17. La fenêtre de réception de données s'étend de la ligne 17 à la ligne 21. Au-delà de cette fenêtre et à peu près jusqu'au prochain zéro de FCNT, l'unité centrale se consacre à traiter les paquets de données.

L'unité centrale envoie, après les avoir reconnues, les valeurs encryptées de EMM et ECMₙ, ECMₙ₊₁, au processeur 23 qui les traite de façon connue en soi. Le processeur 23 élabore à partir de ces valeurs encryptées le mot de commande CW (non encrypté) qu'il envoie à l'unité de commande 22, et celle-ci le charge au passage à zéro de FCNT dans le générateur pseudo-aléatoire 24. Ainsi, ce générateur 24 est synchronisé avec le générateur 6 de l'émetteur. Chaque valeur de la séquence pseudo-aléatoire fournie par le générateur 24 pour chaque ligne de l'image donne la valeur correspondante du point de coupure de cette ligne, qui est, bien entendu, le même que celui déterminé par le générateur 6 pour la même ligne.

Du fait que l'émetteur envoie fréquemment (toutes les 20 secondes) un grand nombre de valeurs de ECMₙ et ECMₙ₊₁ (16 de chaque pour l'exemple décrit), le décodeur peut être à même de décrypter très rapidement le signal reçu (en moins de 3s environ).

Du fait que le traitement de décodage de la vidéo occupe la durée d'une ligne de balayage, la présente invention prévoit avantageusement de décaler, à l'émission, la salve de chrominance relative à une ligne vers la ligne suivante, ce qui permet d'économiser une mémoire (par exemple du type "FIFO") dans chaque décodeur.

A la réception, le traitement de la vidéo étant fait dans la ligne courante, on peut transmettre les signaux de synchronisation et la salve de chrominance de façon transparente à travers un registre tampon (dont le prix est nettement inférieur à celui d'une mémoire de type FIFO par exemple) et restituer le signal désembrouillé correspondant à la salve précitée.

Par contre, si la salve de chrominance n'était pas transmise avec un retard d'une ligne par rapport à son signal vidéo correspondant, il faudrait utiliser une ou deux mémoires supplémentaires (selon que l'on désire lire et écrire simultanément la mémoire ou non) afin de décaler les signaux de synchronisation et la salve de chrominance d'autant de temps que dure le désembrouillage vidéo, ce qui augmenterait corrélativement le prix du décodeur (qui est un produit fabriqué en grande série).

## Revendications

1. Procédé d'embrouillage de signaux vidéo composites, l'embrouillage se faisant par permutation de ligne et étant commandé par une séquence pseudo-aléatoire dépendant d'un mot de commande (CW) dont la valeur encryptée est incorporée au signal vidéo composite, procédé incluant dans les lignes inutilisées d'au moins une partie des images émises des paquets de données encryptées correspondant au mot de commande, ces données étant des messages d'autorisation (EMM) spécifiqu'es à chaque utilisateur, et des messages d'accès (ECM) communs à tous les utilisateurs, ledit procédé étant caractérisé par le fait que la salve de chrominance relative à une ligne est décalée vers la ligne suivante.

2. Procédé selon la revendication précédente, caractérisé en ce que les messages d'accès comportent des messages d'acces courants (ECMn) et des messages d'accès immédiatement consécutifs aux messages courants (ECMn+1).

3. Procédé selon l'une des revendications 1 ou 2, caractérisé en ce que l'on compte le nombre de trames émises (FCNT) et que l'on charge dans le générateur pseudo-aléatoire générant ladite séquence pseudo-aléatoire un nouveau mot de commande (CW) à chaque fois que ce nombre atteint une valeur déterminée.

4. Procédé selon l'une des revendications 1 à 3, caractérisé en ce que l'un des paquets de données complet est inclus à chaque image.

5. Procédé selon l'une des revendications 1 à 4, caractérisé en ce que chaque message d'autorisation comporte au moins une adresse particulière d'un décodeur (UA).

6. Procédé de désembrouillage de signaux vidéo composites, l'embrouillage ayant été effectué par permutation de ligne et étant commandé par une séquence pseudo-aléatoire, le désembrouillage étant commandé par une séquence pseudo-aléatoire identique à et synchronisée avec celle d'embrouillage, la séquence pseudo-aléatoire d'embrouillage dépendant d'un mot de commande (CW) dont la valeur encryptée est incorporée au signal vidéo composite, l'embrouillage incluant dans les lignes inutilisées d'au moins une partie des images émises des paquets de données encryptées correspondant au mot de commande, ces données étant des messages d'autorisation (EMM) spécifiques à chaque utilisateur, et des messages d'accès (ECM) communs à tous les utilisateurs, le désembrouillage décodant les messages d'autorisation et d'accès, ledit procédé étant caractérisé en ce que, la salve de chrominance relative à une ligne du signal vidéo ayant été décalée vers la ligne suivante lors de l'embrouillage, la durée de désembrouillage d'une ligne étant égale à la durée d'une ligne, on transmet la salve de chrominance à travers un registre tampon pour ensuite restituer la ligne désembrouillée correspondant à la salve précitée.

7. Dispositif d'embrouillage de signaux vidéo composites, pour un système de transmission d'images comportant un émetteur et des récepteurs, comportant, dans l'émetteur, un circuit numérique d'embrouillage (4) relié à un générateur de séquences pseudo-aléatoires (6) commandé par une unité de commande (5) comportant des moyens produisant des messages d'autorisation (EMM) cryptés spécifiques à chaque récepteur et des messages d'accès (ECM) communs à tous les récepteurs, ces moyens étant reliés à la voie d'émission (7) de l'émetteur, ledit dispositif étant caractérisé par des moyens pour décaler la salve de chrominance d'une ligne donnée vers la ligne suivante.

8. Dispositif de désembrouillage de signaux vidéo composites, pour un système de transmission d'images comportant un émetteur et des récepteurs, l'embrouillage se faisant par permutation de ligne et étant commandé par une séquence pseudo-aléatoire dépendant d'un mot de commande (CW) dont la valeur encryptée est incorporée au signal vidéo composite et incluant dans les lignes inutilisées d'au moins une partie des images émises des paquets de données encryptées correspondant au mot de commande, ces données étant des messages d'autorisation (EMM) spécifiques à chaque récepteur, et des messages d'accès (ECM) communs à tous les utilisateurs, dispositif comprenant un circuit numérique de désembrouillage (14) relié à un générateur de séquences pseudo-aléatoires (24) commandé par une unité de commande (22) reliée à un processeur de sécurité (23) auquel elle transmet les valeurs cryptées des messages d'autorisation (EMM) et des messages d'accès (ECM), ledit dispositif étant caractérisé en ce que, la salve de chrominance relative à une ligne du signal vidéo ayant été décalée vers la ligne suivante lors de l'embrouillage, il comprend un registre tampon transmettant la salve de chrominance, sans que le dispositif n'ait à les mémoriser.

## Patentansprüche

1. Verfahren zur Verschleierung von FBAS-Signalen, wobei die Verschleierung durch Zeilenverdrehung erfolgt und durch eine Pseudozufallsfolge gesteuert wird, die von einem Kontrollwort (CW) abhängt, dessen verschlüsselter Wert in dem FBAS-Signal enthalten ist, wobei dieses Verfahren in die nicht genutzten Zeilen von wenigstens einem Teil der ausgestrahlten Bilder Pakete verschlüsselter Daten einfügt, die dem Kontrollwort entsprechen, wobei diese Daten für jeden Nutzer spezifische Berechtigungs-Verwaltungsmeldungen (EMM) und allen Nutzern gemeinsame Zugriffsmeldungen (ECM) sind, wobei dieses Verfahren dadurch gekennzeichnet ist, daß das einer Zeile zugeordnete Farbsynchronsignal in die folgende Zeile verschoben wird.

2. Verfahren nach dem vorhergehenden Anspruch, dadurch gekennzeichnet, daß die Zugriffsmeldungen aktuelle Zugriffsmeldungen (ECMₙ) und unmittelbar auf die aktuellen Meldungen folgendes Zugriffsmeldungen (ECMₙ₊₁) umfassen.

3. Verfahren nach einem der Ansprüche 1 oder 2, dadurch gekennzeichnet, daß die Zahl der gesendeten Halbbilder (FCNT) gezählt wird und daß in den Pseudozufallszahlengenerator, der die Pseudozufallsfolge erzeugt, immer dann ein neues Kontrollwort (CW) eingegeben wird, wenn diese Zahl einen bestimmten Wert annimmt.

4. Verfahren nach einem der Ansprüche 1 bis 3, dadurch gekennzeichnet, daß eines der vollständigen Datenpakete in jedem Bild enthalten ist.

5. Verfahren nach einem der Ansprüche 1 bis 4, dadurch gekennzeichnet, daß jede Berechtigungs-Verwaltungsmeldung wenigstens eine spezielle Adresse eines Decoders (UA) umfaßt.

6. Verfahren zur Entschleierung von FBAS-Signalen, wobei die Verschleierung durch Zeilenverdrehung bewirkt wurde und durch eine Pseudozufallsfolge gesteuert wird, wobei die Entschleierung durch eine Pseudozufallsfolge gesteuert wird, die identisch zu und synchronisiert mit derjenigen der Verschleierung ist, wobei die Pseudozufallsfolge der Verschleierung von einem Kontrollwort (CW) abhängt, dessen verschlüsselter Wert in dem FBAS-Signal enthalten ist, wobei die Verschleierung in die nicht genutzten Zeilen von wenigstens einem Teil der gesendeten Bilder Pakete verschlüsselter Daten einfügt, die dem Kontrollwort entsprechen, wobei diese Daten für jeden Nutzer spezifische Berechtigungs-Verwaltungsmeldungen (EMM) und allen Nutzern gemeinsame Zugriffsmeldungen (ECM) sind, wobei die Entschleierung die Berechtigungs-Verwaltungsmeldungen und Zugriffsmeldungen decodiert, wobei das Verfahren dadurch gekennzeichnet ist, daß, nachdem das einer Zeile des Videosignals zugeordnete Farbsynchronsignal während der Verschleierung in die folgende Zeile verschoben wurde und wenn die Dauer der Entschleierung einer Zeile gleich der Dauer einer Zeile ist, das Farbsynchronsignal über ein Zwischenspeichen übertragen wird, um anschließend die entschleierte, dem vorgenannten Farbsynchronsignal entsprechende Zeile wiederherzustellen.

7. Vorrichtung zur Verschleierung von FBAS-Signalen für ein Bildübertragungssystem, welches einen Sender sowie Empfänger umfaßt, welche im Sender eine digitale Verschleierungsschaltung (4) umfaßt, die mit einem Generator für Pseudozufallsfolgen (6) verbunden ist, der von einer Steuereinheit (5) gesteuert wird, welche Mittel aufweist, die verschlüsselte, für jeden Empfänger spezifische Berechtigungs-Verwaltungsmeldungen (EMM) sowie allen Empfängern gemeinsame Zugriffsmeldungen (ECM) erzeugen, wobei diese Mittel mit dem Sendepfad (7) des Senders verbunden sind, wobei die Vorrichtung gekennzeichnet ist durch Mittel zum Verschieben des Farbsynchronsignals von einer gegebenen Zeile in die folgende Zeile.

8. Vorrichtung zur Entschleierung von FBAS-Signalen für ein Bildübertragungssystem, welches einen Sender sowie Empfänger umfaßt, wobei die Verschleierung durch Zeilenverdrehung erfolgt und von einer Pseudozufallsfolge gesteuert wird, die von einem Kontrollwort (CW) abhängt, dessen verschlüsselter Wert in dem FBAS-Signal enthaiten ist, und in die nicht genutzten Zeilen von wenigstens einem Teil der gesendeten Bilder Pakete verschlüsselter Daten einfügt, die dem Kontrollwort entsprechen, wobei diese Daten für jeden Empfänger spezifische Berechtigungs-Verwaltungsmeldungen (EMM) und allen Nutzern gemeinsame Zugriffsmeldungen (ECM) sind, wobei die Vorrichtung eine digitale Schaltung zur Entschleierung (14) aufweist, die mit einem Generator für Pseudozufallsfolgen (24) verbunden ist, der von einer Steuereinheit (22) gesteuert wird, die mit einem Datenschutzprozessor (23) verbunden ist, zu dem sie die verschlüsselten Werte der Berechtigungs-Verwaltungsmeldungen (EMM) und der Zugriffsmeldungen (ECM) überträgt, wobei die Vorrichtung dadurch gekennzeichnet ist, daß, nachdem das einer Zeile des Videosignals zugeordnete Farbsynchronsignal während der Verschleierung während der Verschleierung in die folgende Zeile verschoben wurde, sie einen Zwischenspeicher aufweist, der das Farbsynchronsignal überträgt, ohne daß die Vorrichtung sie speichern muß.

## Claims

1. Method of scrambling composite video signals, the scrambling being done by line interchanging and being controlled by a pseudo-random sequence depending on a control word (CW) the encrypted value of which is incorporated with the composite video signal, the method being such that packets of encrypted data corresponding to the control word are included in the unused lines of at least some of the transmitted pictures, these data being entitlement messages (EMM) specific to each user, and access messages (ECM) common to all the users, the said method being characterized in that the chrominance burst relating to a line is shifted towards the following line.

2. Method according to the preceding claim, characterized in that the access messages comprise current access messages (ECMₙ) and access messages immediately consecutive with the current messages (ECMₙ₊₁).

3. Method according to either of claims 1 or 2, characterized in that the number of frames transmitted (FCNT) is counted, and that a new control word (CW) is loaded into the pseudo-random generator generating the said pseudo-random sequence each time this number reaches a specified value.

4. Method according to one of claims 1 to 3, characterized in that one complete data packet is included in each picture.

5. Method according to one of claims 1 to 4, characterized in that each entitlement message comprises at least one particular address of a decoder (UA).

6. Method of unscrambling composite video signals, the scrambling having been done by line interchanging and being controlled by a pseudo-random sequence, the unscrambling being controlled by a pseudo-random sequence identical to and synchronized with that for scrambling, the pseudo-random scrambling sequence depending on a control word (CW) whose encrypted value is incorporated with the composite video signal, the scrambling being such that packets of encrypted data corresponding to the control word are included in the unused lines of at least some of the transmitted pictures, these data being entitlement messages (EMM) specific to each user, and access messages (ECM) common to all the users, the unscrambling decoding the entitlement and access messages, the said method being characterized in that, the chrominance burst relating to a line of the video signal having been shifted towards the following line during the scrambling, the duration of unscrambling of a line being equal to the duration of a line, the chrominance burst is transmitted through a buffer register so as subsequently to reconstruct the unscrambled line corresponding to the aforesaid burst.

7. Device for scrambling composite video signals, for a picture transmission system comprising a transmitter and receivers, comprising, in the transmitter, a digital scrambling circuit (4) connected to a generator (6) of pseudo-random sequences controlled by a control unit (5) comprising means producing encrypted entitlement messages (EMM) specific to each receiver and access messages (ECM) common to all the receivers, these means being connected to the transmission channel (7) of the transmitter, the said device being characterized by means for shifting the chrominance burst of a given line towards the following line.

8. Device for unscrambling composite video signals, for a picture transmission system comprising a transmitter and receivers, the scrambling being done by line interchanging and being controlled by a pseudo-random sequence depending on a control word (CW) the encrypted value of which is incorporated with the composite video signal and including packets of encrypted data corresponding to the control word in the unused lines of at least some of the transmitted pictures, these data being entitlement messages (EMM) specific to each receiver, and access messages (ECM) common to all the users, the device comprising a digital unscrambling circuit (14) connected to a generator (24) of pseudo-random sequences controlled by a control unit (22) connected to a security processor (23) to which it transmits the encrypted values of the entitlement messages (EMM) and of the access messages (ECM), the said device being characterized in that, the chrominance burst relating to a line of the video signal having been shifted towards the following line during scrambling, it comprises a buffer register transmitting the chrominance burst, without the device having to store them.
